# EUROPEAN PATENT APPLICATION

(11) **EP 4 576 935 A1**
(43) Date of publication of application: **25.06.2025**
(21) Application number: 24221839.4
(22) Date of filing: 19.12.2024
(51) Int. Cl.: H05B 6/06, H05B 6/04

(54) **100 HZ NOISE REDUCTION IN A COOKTOP**

(30) Priority: 20.12.2023 US 202318390598
(71) Applicant: Whirlpool Corporation, Benton Harbor, MI 49022 (US)
(72) Inventor: Baldo, Salvatore, Benton Harbor (US); Barbati, Mario, Benton Harbor (US); Gallivanoni, Andrea, Benton Harbor (US)
(74) Representative: Eisenführ Speiser

(57) **Abstract**

A cooktop (10) includes at least one induction burner (12), a power receiving module (14) configured to receive an applied mains voltage, and a power converter (16). The power converter (16) transmitting the applied mains voltage from the power receiving module (14) to at least one induction burner (12). The power converter (16) includes an EMI filter (34) in electrical communication with the power receiving module (14), a DCBUS capacitor (18), and a power factor corrector circuit (20, 120, 220, 320) electrically connected between the EMI filter (34) and the DCBUS capacitor (18). The power converter (16) further includes a logic microcontroller (17) configured to maintain a power factor of the power converter (16) at a value within a range of 0.8 - 1, at steady state condition of a DCBUS voltage. An inverter (22) is supplied with the DCBUS voltage that converts the DCBUS voltage to an alternating voltage for the at least one induction burner (12).

## Description

### FIELD OF THE DISCLOSURE

The present disclosure generally relates to a cooktop with a system and method for reducing audible hum.

### BACKGROUND OF THE DISCLOSURE

In an Induction cooktop there are one or more power converters suitably connected to one or more inductors or coils. The coils are powered with a high frequency alternating voltage. If a pan made of ferromagnetic material is placed on the coil, the transfer of power by induction takes place and the pan heats up. During operation, modulation of high-frequency alternating voltage generates an audible hum noise as the power delivered to the pan increases.

Accordingly, the present disclosure generally relates to a cooktop with a system and method for reducing the audible hum.

### SUMMARY OF THE DISCLOSURE

According to one aspect of the present disclosure, a cooktop includes at least one induction burner, a power receiving module configured to receive an applied mains voltage, and a power converter. The power converter transmitting the applied mains voltage from the power receiving module to at least one induction burner. The power converter includes an EMI filter in electrical communication with the power receiving module, a DCBUS capacitor, and a power factor corrector circuit electrically connected between the EMI filter and the DCBUS capacitor. The power converter further includes a logic microcontroller configured to maintain a power factor of the power converter at a value within a range of 0.8 - 1, at steady state condition of a DCBUS voltage. An inverter is supplied with the DCBUS voltage that converts the DCBUS voltage to an alternating voltage for the at least one induction burner.

According to another aspect of the present disclosure, a cooktop includes at least one induction burner, a power receiving module configured to receive an applied mains voltage, and a power converter. The power converter transmitting the applied mains voltage from the power receiving module to at least one induction burner. The power converter includes an EMI filter in electrical communication with the power receiving module, a DCBUS capacitor, and a power factor corrector circuit electrically connected between the EMI filter and the DCBUS capacitor having a nominal capacity of at least 100 *µ*F. The power converter further includes a logic microcontroller configured to maintain a power factor of the power converter at a value within a range of 0.8 - 1, at steady state condition of a DCBUS voltage. An inverter is supplied with the DCBUS voltage that converts the DCBUS voltage to an alternating voltage for the at least one induction burner.

According to yet another aspect of the present disclosure, a cooktop includes at least one induction burner, a power receiving module configured to receive an applied mains voltage, and a power converter. The power converter transmitting the applied mains voltage from the power receiving module to at least one induction burner. The power converter includes an EMI filter in electrical communication with the power receiving module, a DCBUS capacitor, and a power factor corrector circuit electrically connected between the EMI filter and the DCBUS capacitor having a nominal capacity of at least 15 *µ*F. The power converter further includes a logic microcontroller configured to maintain a power factor of the power converter at a value within a range of 0.8 - 1, at steady state condition of a DCBUS voltage. An inverter is supplied with the DCBUS voltage that converts the DCBUS voltage to an alternating voltage for the at least one induction burner.

These and other features, advantages, and objects of the present disclosure will be further understood and appreciated by reference to the following specification, claims, and appended drawings.

### BRIEF DESCRIPTION OF THE DRAWINGS

In the drawings:
FIG. 1 is a top perspective view of a cooktop, according to one aspect of the present disclosure;
FIG. 2 is a top plan view of a cooktop with a power converter that reduces electrical noise, according to one aspect of the present disclosure;
FIG. 3 is a schematic view of a power converter, according to one aspect of the present disclosure;
FIG. 4A is a graphical representation of electrical behavior of the cooktop with a high value capacitor and without a power factor corrector circuit, according to one aspect of the present disclosure;
FIG. 4B is a graphical representation of electrical behavior of the cooktop with a high value capacitor and a power factor corrector circuit, according to one aspect of the present disclosure;
FIG. 5 is a schematic view of a power converter with a power factor corrector circuit of a first construction, according to one aspect of the present disclosure;
FIG. 6 is a schematic view of a power converter with a power factor corrector circuit of a second construction, according to one aspect of the present disclosure;
FIG. 7 is a schematic view of a power converter with a power factor corrector circuit of a third construction, according to one aspect of the present disclosure; and
FIG. 8 is a schematic view of a power converter with a power factor corrector circuit of a fourth construction, according to one aspect of the present disclosure.

The components in the figures are not necessarily to scale, emphasis instead being placed upon illustrating the principles described herein.

### DETAILED DESCRIPTION

The present illustrated embodiments reside primarily in combinations of method steps and apparatus components related to a cooktop with a system and method for reducing electrical noise and a resulting audible hum. Accordingly, the apparatus components and method steps have been represented, where appropriate, by conventional symbols in the drawings, showing only those specific details that are pertinent to understanding the embodiments of the present disclosure. Further, like numerals in the description and drawings represent like elements.

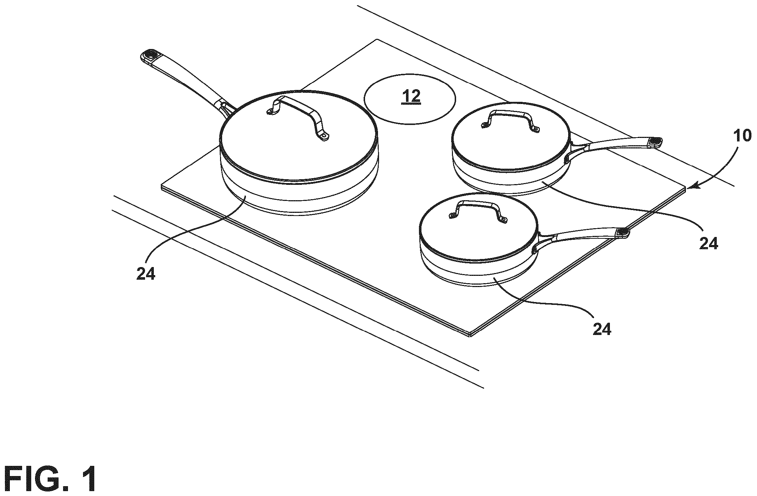

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a ..." does not, without more constraints, preclude the existence of additional identical elements in the process, method, article, or apparatus that comprises the element.

Referring initially to FIGS. 1, 2, 4B, and 5, reference numeral 10 designates a cooktop. The cooktop 10 includes at least one burner 12 (e.g., at least one induction burner), a power receiving module 14 configured to receive an applied mains voltage, and a power converter 16. The power converter 16 transmits the applied mains voltage from the power receiving module 14 to the induction burner 12. The power converter 16 includes an EMI filter 34 in electrical communication with the power receiving module 14, a DCBUS capacitor 18, and a power factor corrector circuit 20 electrically connected between the EMI filter 34 and the DCBUS capacitor 18. The power converter 16 further includes a logic microcontroller 17 configured to maintain a power factor of the power converter 16 at a value within a range of 0.8 - 1, at steady state condition of a DCBUS voltage. An inverter 22 is supplied with the DCBUS voltage that converts the DCBUS voltage to an alternating voltage for the at least one induction burner 12. As will be appreciated with further reading, a nominal value of the DCBUS capacitor 18 and features of the power converter 16 can be modified depending on characteristics of applied mains voltage (e.g., the number of phases), and a maximum rated power. More particularly, these features can be modified to reduce an audible hum associated with traditional induction cooktops.

With reference now to FIG. 1, the at least one burner 12 may include a plurality of burners 12. In some embodiments, the power converter 16 may be operably connected to each of the burners 12 to perform the methods and functions described globally (e.g., to each of the burners 12). In other embodiments, the power converter 16 may include a plurality of power converters 16 in equal numbers to and matched with the burners 12 and each power converter 16 may perform the methods and functions described for the matched burner 12 individually. In still further embodiments, the power converter 16 may include certain components that perform the methods and functions described globally and other components that perform the methods and functions individually. In still further embodiments, the power converter 16 may be operably connected to two or more burners 12.

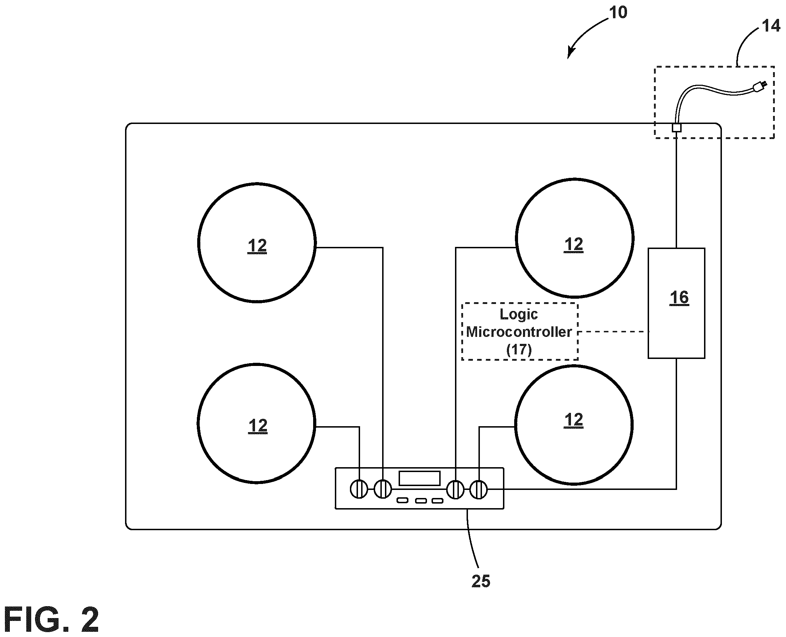

With reference now to FIGS. 1 and 2, the cooktop 10 is depicted with a plurality of burners 12 connected to the power converter 16. However, it should be appreciated that the power converter 16 may be connected to a single one of the burners 12. The cooktop 10 and burner 12 may operate on induction-based technologies. More particularly, the burner 12 operates as an inductor that is powered with a high frequency alternating voltage. When a cooking vessel 24 made of ferromagnetic material is placed on the burner 12, the burner 12 transfers power by induction to heat the cooking vessel 24. Energizing the burners 12 may be facilitated by a user interface 25.

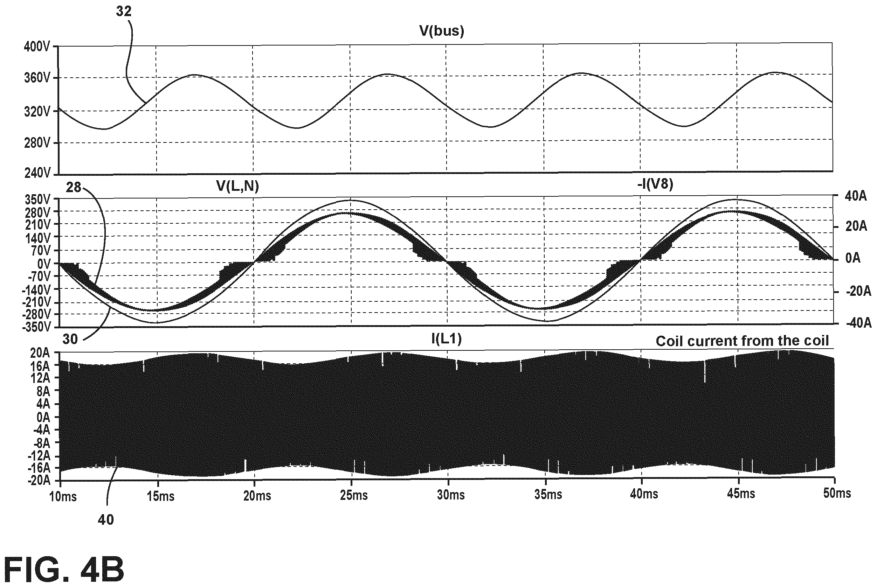

With reference now to FIGS. 2 and 4B, the power receiving module 14 may be configured as a mains line (e.g., power cord) that receives the mains voltage from a wall outlet. In some embodiments, a mains current at approximately 50 Hz as generally designated by reference numeral 28 and the mains voltage (e.g., applied mains voltage) is a 230 root mean square voltage ("VRMS") generally designated by reference numeral 30. In such embodiments, the power delivered to the cooking vessel 24 is about 3.7KW. The DCBUS capacitor 18 and a rectifier 46 are in communication with the power receiving module 14 and rectify the mains voltage 30 to a DCBUS voltage as generally designated by reference numeral 32. The DCBUS voltage 32 is rectified and smoothed replica of the mains voltage 30. In this manner, the power delivered to the cooking vessel 24 is about 3.7KW as previously indicated. In other embodiments, the mains voltage 30 is a 240 VRMS and the mains current 28 has a frequency of 60 Hz. While the logic microcontroller 17 is illustrated as being on a different board (e.g., PCB board) than the power converter 16, it should be appreciated that, in some embodiments, the logic microcontroller 17 may be located on the same board (e.g., PCB board) as the power converter 16.

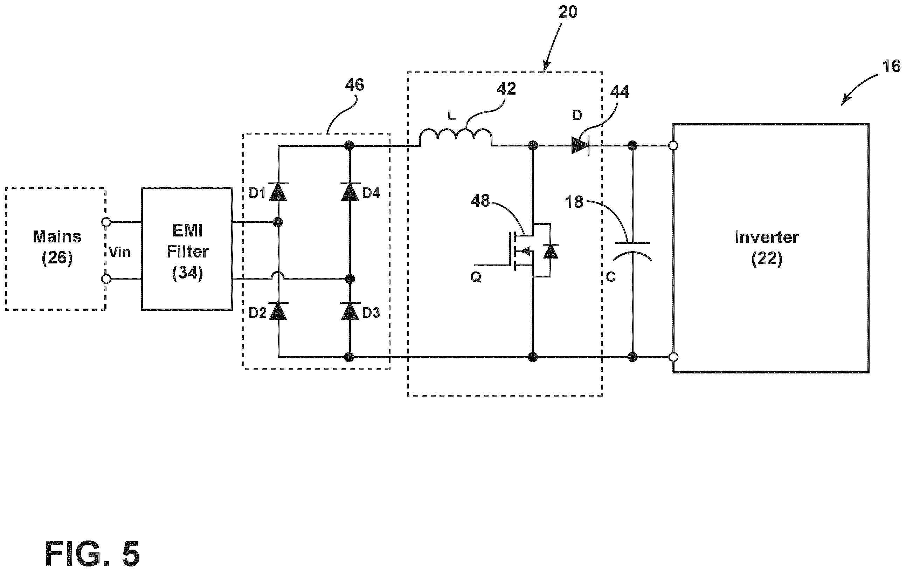

With reference now to FIGS. 4B and 5, the power factor is a property of an electrical system of the cooktop 10 as a whole and is related to power absorption from the power receiving module 14 (e.g., mains line). More particularly, there is a distinction between active power, reactive power, and their vector sum apparent power. In this manner, power factor may be defined by the ratio between active power and apparent power, which, ideally, is as close as possible to 1 and remains substantially constant. In other words, since the mains voltage 30 is a sine wave, the current absorbed by the electrical system of the cooktop 10 should also be a sine wave that is in sync with the mains voltage 30, such that the power factor remains at the substantially constant value at steady state condition of 1 (e.g., 0.8 - 1.0). Deviations between the mains voltage 30 and the current absorbed by the electrical system of the cooktop 10 typically decrease the power factor and, as such, the power factor corrector circuit 20 is used to maintain the power factor at the substantially constant value at steady state condition (e.g., as close as possible to 1). For example, when the DCBUS capacitor 18 has a value of 5 *µ*F or less (not shown), the mains current 28 and the mains voltage 30 are substantially sinusoidal and in phase with each other. In this manner, the power factor is close to 1 and the system is in compliance with electromagnetic emission compatibility ("EMC") standards. However, when the 100 Hz half-waves supply the inverter 22 (e.g., when the DCBUS capacitor 18 has a value of 5 *µ*F or less), as a consequence, the current passing through the coil and the pot is also modulated at 100 Hz, producing on the burner 12 an audible hum. More specifically, the current passing through the coil produces an electromagnetic attraction force on the pan/pot proportional to the square of its intensity. Since the current is modulated at 100 Hz, this force of attraction will be proportional to 100 Hz, causing the annoying noise caused by the continuous attraction of the pan/pot against the glass of the cooktop 10.

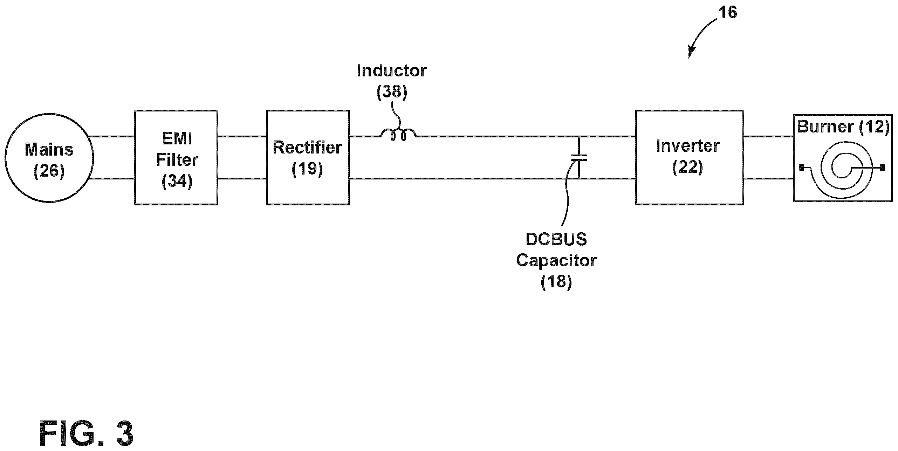

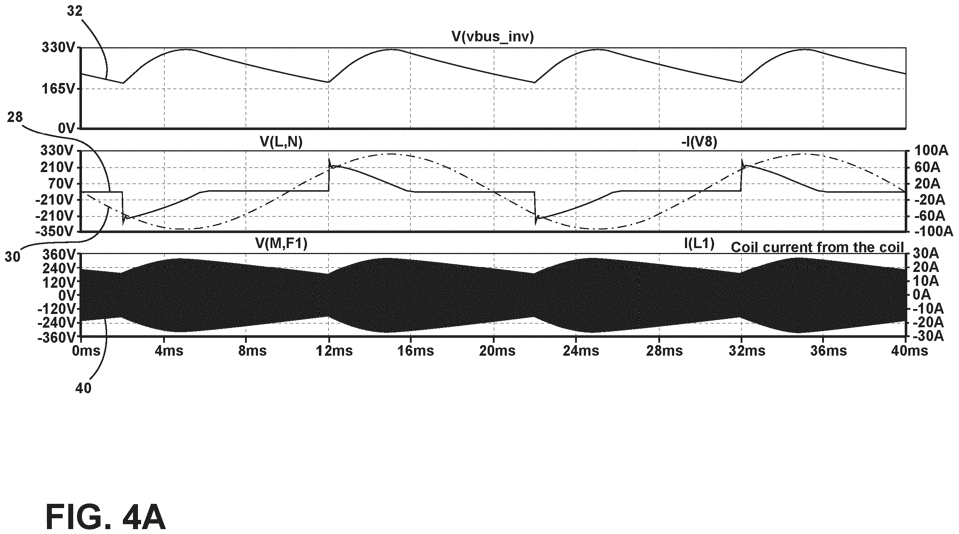

With reference now to FIGS. 3 and 4A, a solution to reduce the audible hum includes implementing a configuration of the DCBUS capacitor 18 that has a high value, which will be defined in detail below. However, without implementing the power factor corrector circuit 20, the power factor may be greatly decreased and/or in an inconstant state as the mains current 28 becomes impulsive and out of phase with the mains voltage 30 (FIG. 4A). More particularly, as best illustrated in FIG. 3, the power converter 16 includes the EMI (electromagnetic emission) filter 34, a rectifier 19 (e.g., rather than rectifier 46), an inductor 38, and the DCBUS capacitor 18, and the inverter 22 but does not include the power factor corrector circuit 20. The high value maintains the DCBUS voltage 32 as constant as possible and drives the inverter 22 with a substantially constant DC signal, due to the unavoidable ripple. In the example in FIG. 4A, 3.7kW are delivered to the cooking vessel 24 and the DCBUS capacitor 18 has a value of 680 *µ*F without the power factor corrector circuit 20. More particularly, the example starts from a mains voltage 30 of 230 Vrms (325 V peak), the DCBUS voltage 32 does not reach zero but remains at a minimum value of about 190 V. As a result, modulation at 100 Hz is greatly reduced and, consequently the resulting audible hum is greatly attenuated. However, without the power factor corrector circuit 20, the power factor may be greatly decreased as the mains current 28 becomes impulsive and out of phase with the mains voltage 30. In this manner, even though the audible hum is reduced, it becomes necessary to implement the power factor corrector circuit 20, such that the power factor remains at the substantially constant value at steady state condition of 1 (e.g., 0.8 - 1.0).

With reference now to FIGS. 4B and 5, the power converter 16 may include the DCBUS capacitor 18 of a high value, the rectifier 46, the EMI (electromagnetic emission) filter 34, the invertor 22, and an inductor 42 (e.g., rather than inductor 38) in addition to the power factor corrector circuit 20. The high value of the DCBUS capacitor 18 is dependent on the configuration of the power factor corrector circuit and the number of supply phases provided in the applied mains voltage. The power factor corrector circuit 20 of FIG. 5 is a single phase (e.g., monophase) configuration and the applied mains voltage is provided with a single supply phase. In single phase configurations, the DCBUS capacitor 18 includes a high value that may be defined as greater than 100 *µ*F and an inductor 42 greater than 50 *µ*H (e.g., between 50 *µ*H and 100 *µ*H, or greater than 100 *µ*H). More particularly, the DCBUS capacitor 18 may have a value of at least 100 *µ*F or greater, at least 125 *µ*F or greater, at least 200 *µ*F or greater, at least 300 *µ*F or greater, at least 375 *µ*F or greater, at least 400 *µ*F or greater, at least 500 *µ*F or greater, at least 600 *µ*F or greater, at least 700 *µ*F or greater, at least 800 *µ*F or greater, at least 900 *µ*F or greater, at least 1000 *µ*F or greater, between 100 *µ*F and 5000 *µ*F, between 100 *µ*F and 700 *µ*F, between 200 *µ*F and 700 *µ*F, between 300 *µ*F and 700 *µ*F, between 400 *µ*F and 700 *µ*F, between 600 *µ*F and 700 *µ*F, between 370 *µ*F and 800 *µ*F, or about any of the provided values and ranges. In some embodiments, the DCBUS capacitor 18 may have a high value defined as a nominal capacity of at least 100 *µ*F (e.g., at least 125 *µ*F) for each KW of a maximum rated power for the inductor burner 12. However, the higher the value of the DCBUS capacitor 18, the more expensive it becomes. As such, depending on the operating principles of the cooktop 10, a balance between price and performance can be determined.

As illustrated in FIG. 4B, it is beneficial to implement the power factor corrector circuit 20 to ensure substantially constant DCBUS signal (e.g., DCBUS voltage 32) while keeping the power factor at the substantially constant value at steady state condition (e.g., as close as possible to 1). More particularly by implementing the power factor corrector circuit 20, the mains voltage 30 and mains current 28 are in phase and the DCBUS voltage 32 no longer exhibits a shape of the half-waves at 100 / 120 Hz (i.e., FIG. 4A), with a consequent current flowing in the pot being almost constant. As a result, the acoustic noise heard on the pot is greatly reduced. In this manner, compliance with EMC standards is met, the power factor is maintained at the substantially constant value at steady state condition, and the resulting audible hum is greatly reduced. In some embodiments, the power factor corrector circuit 20 of the first construction is configured as a boost converter (FIG. 5). Indeed, traditional systems that do not include the DCBUS capacitor 18 of high value much less the power factor corrector circuit 20 and typically exhibit an audible hum of the 100 Hz component at about 51 dB, while the system shown in FIGS. 4B-5 has been tested to exhibit a reduction of the 100 Hz component of at least 10 dB, resulting in a reduction of the audible hum at 100 Hz. More particularly, the DCBUS voltage 32 has first harmonic frequency which is a multiple of the frequency of the mains voltage, and the logic microcontroller 17 is configured to reduce the amplitude of the first harmonic frequency of at least 10 decibels, thereby achieving a oscillation of the DCBUS voltage 32 in a range between 40% and 10% of a peak value of the DCBUS voltage 32.

With continued reference to FIGS. 4B and 5, the constant DCBUS signal only occurs when the inverter 22 is in a non-operational state (i.e., when the inverter 22 is not absorbing energy from the DCBUS capacitor 18 and/or other components). However, when the inverter 22 is in an active state, the DCBUS voltage 32 is converted to an AC voltage that is applied to the cooking vessel 24 via the burner 12. A burner current (i.e., current flowing through the burner 12 that is imparted on the cooking vessel 24) is designated by reference numeral 40.

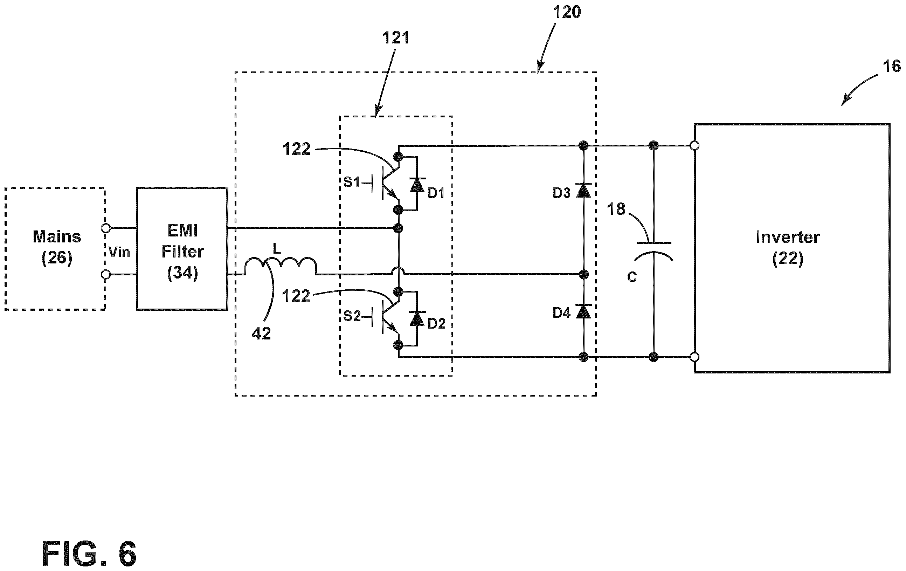

With continued reference to FIGS. 3-4B, the DCBUS capacitor 18 may be configured as a high value capacitor to keep the DCBUS voltage 32 as constant as possible to reduce and/or eliminate the noise and to drive the inverter 22 with a constant DC signal. In some embodiments, the DCBUS capacitor 18 may include more than one (i.e., a plurality) of DCBUS capacitors 18 that individually or together have the values outlined above. As previously explained, however, it should be appreciated that, depending on certain topologies of the converter 16 (e.g., the type of power factor corrector circuit) and operational conditions (e.g., mono-phase or multi-phase), the value of the DCBUS capacitor 18 may be defined in relation to the value of the applied mains voltage. Depending on the topology of the power converter 16, the value of the DCBUS capacitor 18 may be defined differently in relation to the value of the applied mains voltage. For example, as will be described in reference to the multi-phase topologies depicted in FIGS. 6-8, the relationship between the value of the DCBUS capacitor 18 and KW of power may be at least 14 *µ*F (e.g., at least 15 *µ*F) for each KW of the maximum rated power for the inductor burner 12.

With reference now to FIG. 5, the power factor corrector circuit 20 of the first construction may be configured as a boost converter. The boost converter may be a single-phase (i.e., mono-phase) configuration when the applied mains voltage is provided with a single supply phase. In such embodiments, the DCBUS capacitor 18 may have a nominal capacity of at least 100 *µ*F. In some embodiments, the DCBUS capacitor 18 may have a nominal capacity of at least 100 *µ*F (e.g., at least 125 *µ*F) for each KW of a maximum rated power for the inductor burner 12. The power factor corrector circuit 20 may include the inductor 42 configured as a differential-mode inductor and at least one diode 44 in electrical communication with the inverter 22 and a switching device 48. However, it should be appreciated that the power factor corrector circuit 20 may have other configurations, such as boost converters with different topologies, other types of converters, boosters, and/or the like, and may operate based on inputs form the logic microcontroller 17. Generally speaking, the power factor corrector circuit 20 may have other configurations that facilitate the cooktop 10 operation with the substantially constant DCBUS voltage 32 and power factor unity values, reducing the 100 Hz noise. As illustrated, the power receiving module 14 receives the mains voltage 30 which is transmitted through the power converter 16 to the burner 12. The DCBUS capacitor 18 and the rectifier 46 are in communication with the power receiving module 14 and rectify the mains voltage 30 to the DCBUS voltage 32. The power factor corrector circuit 20 maintains the power factor of the DCBUS voltage 32 at a substantially constant value at steady state condition. The inverter 22 receives the DCBUS voltage 32 in the substantially constant value at steady state condition and changes the DCBUS voltage 32 to an alternating voltage (e.g., a high frequency alternating voltage) for the burner 12. In some embodiments, the rectifier 46 may include a plurality of diodes (D1-D4) located between the power receiving module 14 and the power factor corrector circuit 20. The diodes (D1-D4) may be configured to conduct the mains current 28 primarily in one direction (i.e., towards the power factor corrector circuit 20).

With continued reference to FIG. 5, the power factor corrector circuit 20 includes at least one power switching device 48 (e.g., a controlled switch). The power factor corrector circuit 20 of the first construction was implemented for the signals in FIG. 4B. More particularly, the signals from FIG. 4B were taken by implementing the power factor corrector circuit 20 depicted in FIG. 5, with the differential-mode inductor 42 having a value of 100 *µ*H, the DCBUS capacitor 18 having a value of 680 *µ*F, and the inverter 22 being able to deliver a power of 3700W. The inverter 22 may be of any type, such as quasi-resonant, resonant half bridge, or resonant full bridge. The rectifier 46 may have a variety of constructions, for example, the rectifier 46 may be configured as a diode bridge rectifier. The mains voltage 30 applied to the power converter 16 is sinusoidal (e.g., at 50/60 Hz, 230/240 / 120 / 110 VRMS). The sinusoidal mains voltage 30 received via the power receiving module 14 is rectified by the rectifier 46, which converts in all positive half-waves at 100 Hz. The DCBUS capacitor 18 smooths the rectified signal from the rectifier 46 to obtain the DCBUS signal (e.g., DCBUS voltage 32) in the substantially constant value at steady state condition.

With reference now to FIGS. 1-5, the power converter 16 is configured to maintain the power factor at the substantially constant value at steady state condition and the DCBUS voltage at a substantially constant value at steady state condition such that the cooktop is in compliance with EMC standards. The term "substantially" used in reference to the substantially constant value at steady state condition of the DCBUS voltage 32 and the substantially constant value at steady state condition of the power factor may be defined as within 90% of a mean or steady value. For example, more than 90%, more than 95%, more than 98%, or more than 99% within the mean or stated value. In some embodiments, the substantially constant value at steady state condition of the power factor is within 0.8-1.0. In other embodiments, the substantially constant value at steady state condition of the power factor is within 0.7-1.0 or within 0.9-1.0. Depending on end-use requirements, the values of all components in the power converter 16 (e.g., the DCBUS capacitor 18 value) can be adjusted to obtain a good compromise between the power factor and DCBUS voltage 32 in a variety of cooktop 10 architectures and mains voltage 30 and current 28. Generally, the DCBUS capacitor 18 reduces the modulation of the 100 Hz (e.g., keeps the DCBUS voltage 32 at the substantially constant value at steady state condition) but reduces the power factor of the power converter 16. The power factor corrector circuit 20 regulates (e.g., increases, decreases, maintains) the power factor to the substantially constant value at steady state condition resulting in the power factor also having a substantially constant value. As a consequence of regulating the power factor, the DCBUS voltage 32 may change (e.g., increase). In some embodiments, the substantially constant value at steady state condition of the DCBUS voltage 32 has first harmonic frequency which is a multiple of the frequency of the mains voltage 30. In some embodiments, the substantially constant value at steady state condition is between 50% and 100% of a DCBUS peak voltage. As example of control strategy of the PFC in figure 5, the logic microcontroller 17 generates a pulse-width modulation ("PWM") signal in which the duty cycle is changed in order to minimize the error between the mains line current 28 and mains line voltage 30, maintaining a power factor of the power converter 16 between 0.8-1.

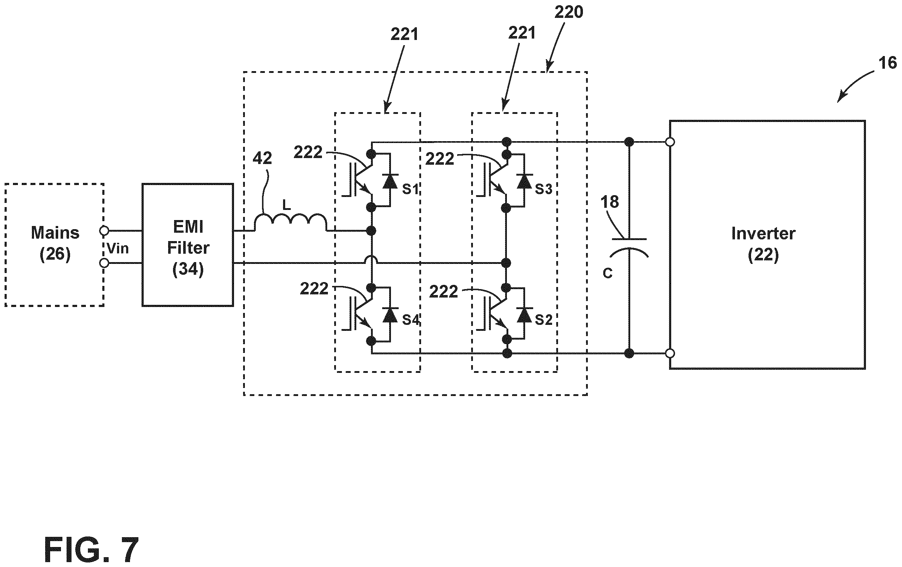

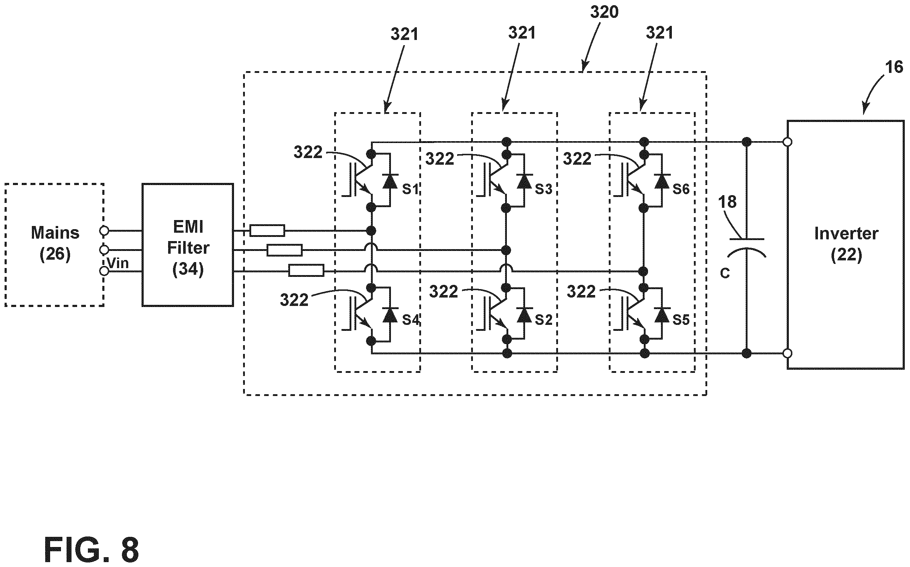

With reference now to FIGS. 6-8, the power factor corrector circuit 20 may include any number of configurations and constructions that enable the disclosure to maintain a power factor in the substantially constant value at steady state condition. While not limited to the constructions provided herein, additional constructions are provided in FIGS. 6-8. Unless otherwise stated, the additional constructions may be implemented in the same environment and exhibit the same behavior as that illustrated in FIGS. 1-4B. Further, unless otherwise stated, the additional constructions of the power factor corrector circuit 20 may include all the same elements, features, values, functions, and exhibit the same behavior as the power factor corrector circuit 20 of the first construction. For example, each of the constructions described herein may reduce the amplitude of the first harmonic frequency of at least 10 decibels, thereby achieving an oscillation of the DCBUS voltage in a range between 40% and 10% of a peak value of the DCBUS voltage. As detailed below, each construction of the power factor circuit may be a single phase (i.e., mono-phase) configuration when the applied mains voltage is provided with a single supply phase (i.e., FIGS. 6 and 7), a multi-phase (i.e., two-phases, three-phases, or more) configuration when the applied mains voltage is provided with two, three, or more supply phases (FIG. 8), or configurable in either the single phase and multi-phase constructions depending on the applied mains voltage supply. Further, the power converter 16 implemented with any construction of the power factor circuit may include or otherwise be in communication with the logic microcontroller 17, which dictates the functionality of the power converter 16 as described herein.

With reference now to FIG. 6, a power factor corrector circuit 120 is illustrated in accordance with a second construction. In the second construction, the power factor corrector circuit 120 includes a totem pole configuration (i.e., a totem pole PFC rectifier circuit) that, based on inputs form the logic microcontroller 17, exhibits functionality of both the rectifier 19 (e.g., or rectifier 46) and the power factor corrector circuit 20. In this manner, the rectifier 19 (e.g., or rectifier 46) may not be included. More particularly, the power factor corrector circuit 120 includes a totem pole 121 that has two power switching devices 122 (e.g., a control switch) that, in conjunction with the diodes D3 and D4, perform the functionality of both the rectifier 19 and the power factor corrector circuit 20. While the waveform for the power factor corrector circuit 120 is not shown, it is similar to FIG. 4B where the DCBUS capacitor 18 has a high value (i.e., the same as those mentioned in reference to the power factor corrector circuit 20) and the mains voltage 30 and mains current 28 are in phase. As such, the DCBUS voltage 32 no longer exhibits a shape of the half-waves at 100/120 Hz (i.e., FIG. 4A), with a consequent current flowing in the pot being almost constant. As a result, the acoustic noise heard on the pot is greatly reduced, similar to the implementation of the power factor corrector 20 of the first construction. In some embodiments, the power factor corrector circuit 120 of the second construction is a single-phase (i.e., mono-phase) configuration when the applied mains voltage is provided with a single supply phase. In such embodiments, the DCBUS capacitor 18 may have a nominal capacity of at least 100 *µ*F (e.g., at least 125 *µ*F ). In some embodiments, the DCBUS capacitor 18 may have a nominal capacity of at least 100 *µ*F (e.g., at least 125 *µ*F ) for each KW of a maximum rated power for the inductor burner 12. However, it should be appreciated that, in other embodiments, the power factor corrector circuit 120 of the second construction is a multi-phase (i.e., two-phases, three-phases, or more) configuration when the applied mains voltage is provided with two, three, or more supply phases. In such embodiments, the DCBUS capacitor 18 may have a reduced nominal capacity of at least 14 *µ*F (e.g., at least 15 *µ*F). In some embodiments, the DCBUS capacitor 18 may have a nominal capacity at least 14 *µ*F (e.g., at least 15 *µ*F) of at least 15 *µ*F for each KW of a maximum rated power for the inductor burner 12.

With reference now to FIG. 7, a power factor corrector circuit 220 is illustrated in accordance with a third construction. In the third construction, the power factor corrector circuit 220 includes a bridgeless totem pole configuration (i.e., a totem pole bridgeless PFC circuit) that includes a plurality of power switching devices 222. More particularly, the power factor corrector circuit 220 includes a pair of totem poles 221 that each includes a pair of power switching devices 222, for four power switching devices 222 in total. Similar to the second construction, the power factor corrector circuit 220, based on inputs form the logic microcontroller 17, exhibits functionality of both the rectifier 19 (e.g., or rectifier 46) and the power factor corrector circuit 20. In this manner, the rectifier 19 (e.g., or rectifier 46) may not be included. It should further be appreciated that, in some embodiments, the power factor corrector circuit 220 may not include any diodes that are replaced by the power switching devices 222. While the waveform for the power factor corrector circuit 220 is not shown, it is similar to FIG. 4B where the DCBUS capacitor 18 has a high value (i.e., the same as those mentioned in reference to the power factor corrector circuit 20) and the mains voltage 30 and mains current 28 are in phase. As such, the DCBUS voltage 32 no longer exhibits a shape of the half-waves at 100 / 120 Hz (i.e., FIG. 4A), with a consequent current flowing in the pot being almost constant. As a result, the acoustic noise heard on the pot is greatly reduced, similar to the implementation of the power factor corrector 20, 120 of the first and second constructions. In some embodiments, the power factor corrector circuit 220 of the third construction is a single-phase (i.e., mono-phase) configuration when the applied mains voltage is provided with a single supply phase. In such embodiments, the DCBUS capacitor 18 may have a nominal capacity of at least 100 *µ*F (e.g., at least 125 *µ*F ). In some embodiments, the DCBUS capacitor 18 may have a nominal capacity of at least 100 *µ*F (e.g., at least 125 *µ*F ) for each KW of a maximum rated power for the inductor burner 12. However, it should be appreciated that, in other embodiments, the power factor corrector circuit 120 of the second construction is a multi-phase (i.e., two-phases, three-phases, or more) configuration when the applied mains voltage is provided with two, three, or more supply phases. In such embodiments, the DCBUS capacitor 18 may have a reduced nominal capacity of at least 14 *µ*F (e.g., at least 15 *µ*F). In some embodiments, the DCBUS capacitor 18 may have a nominal capacity of at least 14 *µ*F (e.g., at least 15 *µ*F) for each KW of a maximum rated power for the inductor burner 12.

With reference now to FIG. 8, a power factor corrector circuit 320 is illustrated in accordance with a fourth construction. In the fourth construction, the power factor corrector circuit 320 includes a three-phase topology that is implemented in conjunction with a three-phase mains line. The power factor corrector circuit 320 is depicted as including three phases and a pair of power switching devices 322 for each phase a, b, and c that function as a three-phase active rectifier. Considering a mains line of 50 Hz, the DCBUS voltage has a ripple of 300 Hz and lower than that of 100 Hz in the single-phase topology (e.g., FIG. 5). In multi-phase topologies, the value of the DCBUS capacitor 18 may be defined in relation to the value of the applied mains voltage differently than in the case of single-phase topologies, including having values below 55 *µ*F. More particularly, the value of the DCBUS capacitor 18 may have a reduced nominal capacity of at least 14 *µ*F (e.g., at least 15 *µ*F). In some embodiments, the DCBUS capacitor 18 may have a nominal capacity of at least 14 *µ*F (e.g., at least 15 *µ*F) for each KW of a maximum rated power for the inductor burner 12. The three-phase system depicted in FIG. 8 requires a DCBUS capacitor 18 of lower value to exhibit a lower acoustic hum as the DCBUS ripple is lower. For example, if the mains line voltage has a value of 1KW, then the value of the DCBUS capacitor 18 may be defined as at least 14 *µ*F, or more preferably at least 15 *µ*F. The power factor corrector circuit 320, based on inputs form the logic microcontroller 17, exhibits functionality of both the rectifier 19 (e.g., or rectifier 46) and the power factor corrector circuit 20.

The disclosure herein is further summarized in the following paragraphs and is further characterized by combinations of any and all of the various aspects described therein.

According to one aspect of the present disclosure, a cooktop includes at least one induction burner, a power receiving module configured to receive an applied mains voltage, and a power converter. The power converter transmitting the applied mains voltage from the power receiving module to at least one induction burner. The power converter includes an EMI filter in electrical communication with the power receiving module, a DCBUS capacitor, and a power factor corrector circuit electrically connected between the EMI filter and the DCBUS capacitor. The power converter further includes a logic microcontroller configured to maintain a power factor of the power converter at a value within a range of 0.8 - 1, at steady state condition of a DCBUS voltage. An inverter is supplied with the DCBUS voltage that converts the DCBUS voltage to an alternating voltage for the at least one induction burner.

According to another aspect, a nominal capacity of a DCBUS capacitor has a value of at least 100 *µ*F for each KW of a maximum rated power for an inductor burner, when the applied mains voltage is provided with a single supply phase, or, at least 15 *µ*F for each KW of the maximum rated power for the inductor burner, when the applied mains voltage is provided with at least two supply phases.

According to yet another aspect, an applied mains voltage is provided with a single supply phase and a maximum rated power for an induction burner is about 3.7KW, and a nominal capacity of a DCBUS capacitor is selected in a range between 370 *µ*F and 800 *µ*F.

According to still another aspect, an applied mains voltage is provided with at least two supply phases and a maximum rated power for an induction burner is about 3.7KW, and a nominal capacity of a DCBUS capacitor is selected in a range between 56 *µ*F and 100 *µ*F.

According to another aspect, a DCBUS voltage has first harmonic frequency which is a multiple of a frequency of a mains voltage, and a logic microcontroller is configured to reduce an amplitude of the first harmonic frequency of at least 10 decibels, thereby achieving a oscillation of a DCBUS voltage in a range between 40% and 10% of a peak value of a DCBUS voltage.

According to yet another aspect, a power factor corrector circuit includes a voltage rectifier and a boost converter.

According to still another aspect, a boost converter includes an inductor with a value of at least 50 *µ*H, one or more diodes, and one or more power switching devices.

According to another aspect, a power factor corrector circuit is configured as a totem pole PFC rectifier circuit when an applied mains voltage is provided with a single supply phase.

According to yet another aspect, a power factor corrector circuit is configured as a two-phase totem pole PFC rectifier circuit or a three-phase totem pole PFC rectifier circuit when an applied mains voltage is provided with two or three supply phases, respectively.

According to still another aspect, a power factor corrector circuit is configured as a totem pole bridgeless PFC when an applied mains voltage is provided with a single supply phase.

According to another aspect, a power factor corrector circuit is configured as a two-phase totem pole bridgeless PFC circuit or a three-phase totem pole bridgeless PFC circuit when an applied mains voltage is provided with two or three supply phases, respectively.

According to yet another aspect, at least one induction burner includes two or more induction burners in communication with a power converter.

According to another aspect of the present disclosure, a cooktop includes at least one induction burner, a power receiving module configured to receive an applied mains voltage, and a power converter. The power converter transmitting the applied mains voltage from the power receiving module to at least one induction burner. The power converter includes an EMI filter in electrical communication with the power receiving module, a DCBUS capacitor, and a power factor corrector circuit electrically connected between the EMI filter and the DCBUS capacitor having a nominal capacity of at least 100 *µ*F. The power converter further includes a logic microcontroller configured to maintain a power factor of the power converter at a value within a range of 0.8 - 1, at steady state condition of a DCBUS voltage. An inverter is supplied with the DCBUS voltage that converts the DCBUS voltage to an alternating voltage for the at least one induction burner.

According to another aspect, a nominal capacity of a DCBUS capacitor is at least 100 *µ*F for each KW of a maximum rated power for an inductor burner and an applied mains voltage is provided with a single supply phase.

According to yet another aspect, a maximum rated power for an induction burner is about 3.7KW and a nominal capacity of a DCBUS capacitor is selected in a range between 370 *µ*F and 800 *µ*F.

According to still another aspect, a power factor corrector circuit includes one of a totem pole PFC rectifier circuit or a boost converter.

According to yet another aspect of the present disclosure, a cooktop includes at least one induction burner, a power receiving module configured to receive an applied mains voltage, and a power converter. The power converter transmitting the applied mains voltage from the power receiving module to at least one induction burner. The power converter includes an EMI filter in electrical communication with the power receiving module, a DCBUS capacitor, and a power factor corrector circuit electrically connected between the EMI filter and the DCBUS capacitor having a nominal capacity of at least 15 *µ*F. The power converter further includes a logic microcontroller configured to maintain a power factor of the power converter at a value within a range of 0.8 - 1, at steady state condition of a DCBUS voltage. An inverter supplied with the DCBUS voltage that converts the DCBUS voltage to an alternating voltage for the at least one induction burner.

According to another aspect, a nominal capacity of a DCBUS capacitor is at least 15 *µ*F for each KW of a maximum rated power for an inductor burner and an applied mains voltage is provided with at least two supply phases.

According to yet another aspect, a maximum rated power for an induction burner is about 3.7KW and a nominal capacity of a DCBUS capacitor is selected in a range between 55 *µ*F and 100 *µ*F.

According to still another aspect, a power factor corrector circuit is configured as one of a multi-phase totem pole PFC rectifier circuit, or a multi-phase totem pole bridgeless PFC circuit.

It will be understood that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

The terms "substantial," "substantially," and variations thereof as used herein are intended to note that a described feature is equal or approximately equal to a value or description. For example, a "substantially planar" surface is intended to denote a surface that is planar or approximately planar. Moreover, "substantially" is intended to denote that two values are equal or approximately equal. In some embodiments, "substantially" may denote values within about 10% of each other, such as within about 5% of each other, or within about 2% of each other.

As used herein, the term "about" means that amounts, sizes, formulations, parameters, and other quantities and characteristics are not and need not be exact, but may be approximate and/or larger or smaller, as desired, reflecting tolerances, conversion factors, rounding off, measurement error and the like. When the term "about" is used in describing a value or an end-point of a range, the disclosure should be understood to include the specific value or end-point referred to. Whether or not a numerical value or end-point of a range in the specification recites "about," the numerical value or end-point of a range is intended to include two embodiments:
one modified by "about," and one not modified by "about." It will be further understood that the end-points of each of the ranges are significant both in relation to the other end-point, and independently of the other end-point.

It is also important to note that the construction and arrangement of the elements of the disclosure as shown in the exemplary embodiments is illustrative only. Although only a few embodiments of the present innovations have been described in detail in this disclosure, it is readily apparent that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connectors or other elements of the system may be varied, and the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes or steps within described processes may be combined with other disclosed processes or steps to form structures within the scope of the present disclosure. The exemplary structures and processes disclosed herein are for illustrative purposes and are not to be construed as limiting.

## Claims

1. A cooktop (10) including:
at least one induction burner (12);
a power receiving module (14) configured to receive an applied mains voltage; and
a power converter (16) transmitting the applied mains voltage from the power receiving module (14) to at least one induction burner (12), the power converter (16) including:
an EMI filter (34) in electrical communication with the power receiving module (14),
a DCBUS capacitor (18),
a power factor corrector circuit (20, 120, 220, 320) electrically connected between the EMI filter (34) and the DCBUS capacitor (18), and
the power converter (16) further including a logic microcontroller (17) configured to maintain a power factor of the power converter (16) at a value within a range of 0.8 - 1, at steady state condition of a DCBUS voltage; and
an inverter (22) supplied with the DCBUS voltage that converts the DCBUS voltage to an alternating voltage for the at least one induction burner (12).

2. The cooktop (10) of claim 1, wherein a nominal capacity of the DCBUS capacitor (18) has a value of one of:
at least 100 *µ*F for each KW of a maximum rated power for the inductor (42) burner (12), when the applied mains voltage is provided with a single supply phase; or
at least 15 *µ*F for each KW of the maximum rated power for the inductor (42) burner (12), when the applied mains voltage is provided with at least two supply phases.

3. The cooktop (10) of claim 2, wherein, when the applied mains voltage is provided with the single supply phase and the maximum rated power for the induction burner (12) is about 3.7KW, the nominal capacity of the DCBUS capacitor (18) is selected in the range between 370 *µ*F and 800 *µ*F.

4. The cooktop (10) of claim 2, wherein, when the applied mains voltage is provided with at least two supply phases and the maximum rated power for the induction burner (12) is about 3.7KW, the nominal capacity of the DCBUS capacitor (18) is selected in the range between 56 *µ*F and 100 *µ*F.

5. The cooktop (10) as in one of claims 1-4, wherein the DCBUS voltage has first harmonic frequency which is a multiple of the frequency of the mains voltage, and wherein the logic microcontroller (17) is configured to reduce the amplitude of the first harmonic frequency of at least 10 decibels, thereby achieving a oscillation of the DCBUS voltage in a range between 40% and 10% of a peak value of the DCBUS voltage.

6. The cooktop (10) as in one of claims 1-4, wherein the power factor corrector circuit (20) includes a voltage rectifier and a boost converter.

7. The cooktop (10) of claim 6, wherein the boost converter includes an inductor (42) with a value of at least 50 *µ*H, one or more diodes (D1-D4), and one or more power switching devices (48).

8. The cooktop (10) as in one of claims 1-4, wherein the power factor corrector circuit (120) is configured as a totem pole PFC rectifier circuit when the applied mains voltage is provided with a single supply phase.

9. The cooktop (10) as in one of claims 1-4, wherein the power factor corrector circuit (120, 220) is configured as a two-phase totem pole PFC rectifier circuit or a three-phase totem pole PFC rectifier circuit when the applied mains voltage is provided with two or three supply phases, respectively.

10. The cooktop (10) as in one of claims 1-4, wherein the power factor corrector circuit (220) is configured as a totem pole bridgeless PFC when the applied mains voltage is provided with a single supply phase.

11. The cooktop (10) as in one of claims 1-4, wherein the power factor corrector circuit (220) is configured as a two-phase totem pole bridgeless PFC circuit or a three-phase totem pole bridgeless PFC circuit when the applied mains voltage is provided with two or three supply phases, respectively.

12. The cooktop (10) as in one of claims 1-4, wherein the power factor corrector circuit (220) is configured as a three-phase topology including three phases and a pair of power switching devices (322) for each phase that function as a three-phase active rectifier.

13. The cooktop (10) of claim 1, wherein the at least one induction burner (12) includes two or more induction burner (12)s in communication with the power converter (16).

14. The cooktop (10) of claim 1, wherein the nominal capacity of the DCBUS capacitor (18) is at least 100 *µ*F for each KW of a maximum rated power for the inductor (42) burner (12) and the applied mains voltage is provided with a single supply phase.

15. The cooktop (10) of claim 14, wherein the nominal capacity of the DCBUS capacitor (18) is at least 15 *µ*F for each KW of the maximum rated power for the inductor burner and the applied mains voltage is provided with at least two supply phases.
